# EUROPÄISCHE PATENTSCHRIFT

(11) **EP 0 948 554 B1**
(45) Veröffentlichungstag und Bekanntmachung des Hinweises auf die Patenterteilung: **25.10.2000**
(21) Anmeldenummer: 97954459.0
(22) Anmeldetag: 23.12.1997
(51) Int. Cl.: C08G 59/14, D06N 1/00

(54) **POLYREAKTIONSPRODUKTE-ENTHALTENDES MATERIAL UND VERFAHREN ZUR HERSTELLUNG**
MATERIAL CONTAINING POLYREACTIONS PRODUCTS AND METHOD FOR THE PRODUCTION THEREOF
MATERIAU CONTENANT DES PRODUITS DE POLYREACTION, ET SON PROCEDE DE PRODUCTION

(30) Priorität: 24.12.1996 DE 19654279
(43) Veröffentlichungstag der Anmeldung: 13.10.1999
(73) Patentinhaber: DLW Aktiengesellschaft, D-74321 Bietigheim-Bissingen (DE)
(72) Erfinder: KASTL, Bernd, D-74321 Bietigheim-Bissingen (DE); ESS, Milko, D-71691 Freiberg (DE); MAUK, Hanns-Jörg, D-74395 Mundelsheim (DE)
(74) Vertreter: Müller-Boré & Partner Patentanwälte
(86) Internationale Anmeldenummer: EP9707255
(87) Internationale Veröffentlichungsnummer: WO9828356

(56) Entgegenhaltungen:
- EP-A- 0 228 116
- EP-A- 0 377 258
- EP-A- 0 539 916
- GB-A- 1 049 100
- US-A- 4 686 270

## Beschreibung

Die vorliegende Erfindung betrifft Polyreaktionsprodukte-enthaltende Materialien, ein Verfahren zu deren Herstellung sowie ein Verfahren zur Dessinierung von Flächengebilden auf Basis solcher Polyreaktionsprodukte-enthaltenden Materialien.

Linoleum als elastischer Bodenbelag auf Basis nachwachsender Rohstoffe ist seit langem bekannt. Aufgrund seiner natürlichen Bestandteile hat Linoleum einen hohen baubiologischen und ökologischen Stellenwert erlangt. Jedoch erfordert die Herstellung von Linoleumbelägen im letzten Verfahrensschritt eine mehrere Wochen dauernde Wärmebehandlung, die sogenannte "Reifezeit".

Aus der DE-A-41 35 664 sind Beschichtungsmassen bekannt, die auf nachwachsenden Rohstoffen basieren und zum Beschichten von textilen Flächengebilden oder von Releasepapier dienen. Die Beschichtungsmassen bestehen aus einer Kombination von Epoxidierungsprodukten von Estern ungesättigter Fettsäuren und Teilestern von Polycarbonsäuren mit Polyetherpolyolen sowie einem Hydrophobierungsmittel. Diese Beschichtungsmassen werden zur Herstellung von Bodenbelägen verwendet. Nachteilig ist jedoch, daß die oberste Schicht derart hergestellter Beläge sehr rauh und nicht transparent ist. Ferner erfordern die Rückenbeschichtungen eine umständliche Herstellung mit teuererem Trennpapier, und weisen keinen Schaum auf und sind damit ohne Trittkomfort. Weiterhin zeigt sich, daß die Oberfläche dieser Beläge nicht genügend schmutzabweisend ist und eine schlechte Durchhärtung aufweist.

Aus der WO 96/15203 sind streichfähige Beschichtungsmassen zur Herstellung von Flächengebilden auf Basis nachwachsender Rohstoffe bekannt. Die Herstellung dieser Flächengebilde ist jedoch durch Verwendung von sogenannten "Streichpasten", welche die Beschichtungsmassen enthalten, auf Steichverfahren beschränkt.

In der EP-A-0 539 916 werden Beschichtungsmassen auf der Basis nachwachsender Rohstoffe beschrieben, wobei diese Beschichtungsmassen a) Epoxydierungsprodukte von Estern ungesättigter Fettsäuren, b) Teilester von Polycarbonsäuren mit Polyglykolen und c) ein Hydrophobierungsmttel enthalten. Die aus diesen Beschichtungsmassen gebildeten Flächengebilde zeigen jedoch ein schlechtes Eindruckverhalten und geringe Shore-A-Härte.

Somit liegt der vorliegenden Erfindung die Aufgabe zugrunde, ein neues System zur Herstellung von Flächengebilden auf Basis nachwachsender Rohstoffe bereitzustellen, das insbesondere die zeitintensive Reifezeit von Linoleumbelägen beseitigt und einfach, beispielsweise durch Verpressen, Kalandrieren oder Extrudieren, herzustellen ist. Ferner sollen derart hergestellte Flächengebilde ausgezeichnete Materialeigenschaften aufweisen.

Diese Aufgabe wird durch die in den Ansprüchen gekennzeichneten Ausführungsformen gelöst. Insbesondere wird ein Polyreaktionsprodukt-enthaltendes Material bereitgestellt, welches das Reaktionsprodukt von mindestens einem Epoxydierungsprodukt eines Carbonsäureesters oder einem Gemisch dieser Epoxydierungsprodukte mit einem Gemisch eines Teilesters einer Di- oder Polycarbonsäure und einer Polycarbonsäure mit drei oder mehr Carbonsäuregruppen als Bindemittel und mindestens einen Füllstoff umfaßt.

Als Di- oder Polycarbonsäure des Teilesters können vorzugsweise Maleinsäure, Itaconsäure, Fumarsäure, Bernsteinsäure, Methylbernsteinsäure, Äpfelsäure oder Furandicarbonsäure oder ein mindestens zwei dieser Säuren enthaltendes Gemisch davon verwendet werden.

Die Alkohol-Komponente der Teilester unterliegt keiner besonderen Beschränkung, wobei jedoch vorzugsweise Polyole wie Dipropylenglykol, Propandiole, Butandiole, Hexandiole, Hexantriole oder Pentaerythrit als Alkohol-Komponente eingesetzt werden.

Als Polycarbonsäure mit drei oder mehr Carbonsäuregruppen werden vorzugsweise Citronensäure und Aconitsäure verwendet.

In einer besonders bevorzugten Ausführungsform wird als das Gemisch eines Teilesters einer Di- oder Polycarbonsäure und einer Polycarbonsäure mit drei oder mehr Carbonsäuregruppen ein Gemisch von Maleinsäureanhydrid und Dipropylenglykol und Citronensäure als Vernetzer eingesetzt, wobei der Anteil der Citronensäure bis zu 50 Gew.-%, mehr bevorzugt bis zu 25 Gew.-%, bezogen auf die Gesamtmenge des Vernetzers, beträgt.

Als Epoxidierungsprodukt eines Carbonsäureesters kann vorzugsweise epoxidiertes Leinöl, epoxidiertes Sojaöl, epoxidiertes Rizinusöl oder epoxidiertes Rapsöl oder ein mindestens zwei dieser epoxidierten Produkte enthaltendes Gemisch davon verwendet werden. Als Alkohol-Komponente dieser Carbonsäureester können auch die vorstehend definierten Alkohole der Teilester, wie beispielsweise Dipropylenglykol, Propandiole, Butandiole, Hexandiole, Hexantriole oder Pentaerythrit, eingesetzt werden. Die Carbonsäure-Komponente unterliegt keiner besonderen Beschränkung.

In dem erfindungsgemäßen Bindemittel betragen vorzugsweise die Gewichtsmengen des Vernetzers und des Epoxidierungsproduktes jeweils 5 bis 70 Gew.-%, bezogen auf die Gesamtmenge des Polyreaktionsprodukte-enthaltenden Materials.

Die Füllstoffe sind vorzugsweise Holzmehl, Kreide, Korkmehl, Bariumsulfat, Kieselsäure, Kaolin, Talkum, Glas, Textil- oder Glasfasern oder Pflanzenfasern, Cellulosefasern, Polyesterfasern oder beispielsweise gefärbte Granulate bzw. Chips aus dem erfindungsgemäßen Bindemittel oder ein mindestens zwei dieser Stoffe enthaltendes Gemisch davon. Besonders bevorzugt ist Holzmehl, Kreide oder Korkmehl als Füllstoff.

Das Polyreaktionsprodukte-enthaltende Material umfaßt vorzugsweise 30 bis 98 Gew.-% Bindemittel und 2 bis 70 Gew.-% von mindestens einem Füllstoff, bezogen auf die Gesamtmenge des Polyreaktionsprodukte-enthaltenden Materials.

Ferner kann das Polyreaktionsprodukte-enthaltende Material mindestens einen weiteren Zusatzstoff, wie Pigmente zur Dessinierung, Treibmittel bzw. Schäumungsmittel und Hilfsstoffe, enthalten. Als Hilfsstoffe können beispielsweise Tallöle, synthetische oder natürliche Harze, wie beispielsweise Balsamharz, Kopale, Kohlenwasserstoffharze, und/oder Sikkative, wie beispielsweise Verbindungen der Metalle Al, Li, Ca, Fe, Mg, Mn, Pb, Zn, Zr, Ce oder Co oder eine mindestens zwei dieser Verbindungen enthaltende Kombination davon, verwendet werden.

Das erfindungsgemäße Polyreaktionsprodukte-enthaltende Material kann auch in Form von Präpolymeren bereitgestellt werden, in welchen entweder der Vernetzer oder das Epoxidierungsprodukt im Unterschuß vorliegen kann. Solche Präpolymere sind lagerstabil und zeigen teilweise thermoplastische Eigenschaften. Vorzugsweise liegt das Gewichtsverhältnis von Vernetzer zu Epoxidierungsprodukt in diesen Präpolymeren im Bereich von 5:1 bis 1:10. Erst in einem nachfolgenden Schritt werden diese Präpolymere des erfindungsgemäßen Polyreaktionsprodukte-enthaltenden Materials dann gegebenenfalls unter Zugabe der im Unterschuß vorliegenden Komponente sowie gegebenenfalls weiterer Zusatzstoffe in das vollständig vernetzte Material übergeführt.

Ein weiterer Gegenstand der vorliegenden Erfindung ist ein Verfahren zur Herstellung des vorstehend definierten Polyreaktionsprodukte-enthaltenden Materials, welches die folgenden Schritte umfaßt:
(1) Vorvernetzen einer Di- oder Polycarbonsäure oder deren Derivate oder einem Gemisch davon und eines Epoxidierungsproduktes eines Carbonsäureesters oder einem Gemisch dieser Epoxidierungsprodukte zum Erhalt einer formbaren Masse, und
(2) Compoundieren der formbaren Masse mit mindestens einem Füllstoff, und
(3) Vernetzen der compoundierten Masse und gegebenenfalls Erwärmen zum Erhalt dieses Materials.

Bei Durchführung von Schritt (1) ist der Vernetzungsgrad der formbaren Masse nach Schritt (1) kleiner als der Vernetzungsgrad des Materials nach Schritt (3).

Überraschenderweise hat sich gezeigt, daß durch Vorvernetzung der flüssigen Komponenten gemäß Schritt (1) des erfindungsgemäßen Verfahrens eine formbare Masse erhalten werden kann, die zu Formteilen nach Schritt (3) des erfindungsgemäßen Verfahrens ohne wesentliche Reifezeit weiterverarbeitet werden kann. Dieses Vorvernetzen kann beispielsweise durch Erwärmen der beiden Ausgangsstoffe zur Herstellung eines Bindemittels als Reaktionsprodukt über einen bestimmten Zeitraum gesteuert werden. Der Begriff "formbare Masse" bedeutet in diesem Zusammenhang sowohl ein flüssiges Reaktionsprodukt als auch ein hochviskoses Reaktionsprodukt als Bindemittel. Der Vernetzungsgrad der vorvernetzten formbaren Masse nach Schritt (1) ist gemäß vorliegender Erfindung kleiner als der Vernetzungsgrad des nach Schritt (3) erhaltenen Formteils.

Die Formung der compoundierten Masse nach Schritt (2) kann vor dem Vernetzen in Schritt (3) oder gleichzeitig mit dem Vernetzen nach Schritt (3) durchgeführt werden.

Beispielsweise kann das Verfahren zur Herstellung des vorstehend definierten Polyreaktionsprodukte-enthaltenden Materials auch als Zweistufenverfahren durchgeführt werden, wobei zunächst in einer ersten Stufe ein Präpolymer durch Mischen von Vernetzer und Epoxidierungsprodukt mit einer dieser Komponenten im Unterschuß hergestellt wird. Zur Herstellung des Präpolymers aus dem vorstehend definierten Material kann entweder der Vernetzer oder das Epoxidierungsprodukt im Unterschuß zugegeben werden. Vorzugsweise liegt das Gewichtsverhältnis von Vernetzer zu Epoxidierungsprodukt in der ersten Stufe im Bereich von 5:1 bis 1:10. Anschließend kann das derartig erhaltene Präpolymer verpreßt und granuliert werden, wodurch ein lagerstabiles, infolge der Zusammensetzung mit einer Komponente im Unterschuß noch teilweise thermoplastisches Granulat erhalten wird. In der zweiten Stufe wird dann das teilweise thermoplastische Granulat aus dem Präpolymer gegebenenfalls unter Zugabe der in der ersten Stufe im Unterschuß vorliegenden Komponente sowie gegebenenfalls weiterer Zusatzstoffe vollständig vernetzt. Diese Weitervernetzung kann mittels herkömmlicher Verfahren wie Verpressen beispielsweise über eine Bakkenpresse, Kalanderverfahren oder Extrusionsverfahren oder einer Kombination dieser Verfahren gegebenenfalls unter Erhöhung der bei der ersten Stufe gewählten Temperatur erhalten werden.

Das vorstehend definierte Material oder das gemäß dem vorstehend definierten Verfahren erhaltene Material kann zur Herstellung eines Flächengebildes wie beispielsweise ein Bodenbelag, eine Fliese, ein Dämmaterial oder ein Wandbelag verwendet werden. Diese Flächengebilde.können in homogener Form vorliegen. In einer weiteren Ausführungsform kann das vorstehend definierte Material aber auch auf einen Träger, wie beispielsweise Glasvlies, Pappe, Jutegewebe oder ein Träger auf Basis von Jute, wie beispielsweise Mischungen von Jutevlies und Polypropylen-Polyestervlies, aufgebracht werden.

Ein Vorteil des erfindungsgemäßen Materials ist, daß derartige Flächengebilde mittels herkömmlicher Verfahren wie Verpressen beispielsweise über eine Bakkenpresse, Kalanderverfahren oder Extrusionsverfahren oder einer Kombination dieser Verfahren erhalten werden können.

Die aus dem erfindungsgemäßen Material erhältlichen Flächengebilde können selbstverständlich auch dessiniert werden, wobei als Dessinierungsmethoden beispielsweise das Zugeben von Pigmenten oder gefärbten Granulaten bzw. Chips aus dem erfindungsgemäßen Bindemittel in das vorstehend definierte Polyreaktionsprodukte-enthaltende Material genannt werden können. Zur Dessinierung des aus dem erfindungsgemäßen Material erhältlichen Flächengebildes kann auch das im Stand der Technik bekannte Thermotransferdruckverfahren ausgeführt werden. Des weiteren kann eine Dessinierungsmethode eingesetzt werden, worin vor dem eigentlichen Formprozeß ein bemustertes bzw. bedrucktes, saugfähiges Material auf die formbare Masse aus dem vorstehend definierten Polyreaktionsprodukte-enthaltenden Material aufgebracht wird. Um Spannungen im Flächengebilde zu vermeiden, kann gegebenenfalls auf der Rückseite ein gleichartiges, gegebenenfalls bedrucktes Material als Gegenzug aufgebracht werden. Das saugfähige Material ist vorzugsweise ein Cellulosevlies aus beispielsweise Cellulose-Regeneratfasern mit hoher spezifischer Oberfläche, welches sich durch hohes Saugvermögen, hohe Trocken- und Naßfestigkeit sowie geringen Schrumpf auszeichnet. Die Quadratmetergewichte solcher Cellulosevliese betragen beispielsweise 25 bis 50 g/m². Beim darauffolgendes Verpressen durchdringt ein Teil des erfindungsgemäßen, noch nicht vernetzten Bindemittels das saugfähige Material und bildet nach Aushärtung eine dünne Deck- bzw. Nutzschicht, die gegebenenfalls mit den üblichen Verfahren lackiert werden kann, auf der Oberseite des derartig dessinierten Flächengebildes, wobei die Deck- bzw. Nutzschicht das bemusterte bzw. bedruckte Material vor Abrieb schützt. Ein Vorteil einer solchen, einstufigen Dessiniermethode liegt unter anderem darin, daß ein aus dem vorstehend definierten Polyreaktionsprodukte-enthaltenden Material aufgebautes Flächengebilde beliebig bedruckbar ist, was beispielsweise für Flächengebilde aus Linoleum nicht zutrifft.

Die vorliegende Erfindung wird durch das nachstehende Beispiel näher erläutert.

Im nachfolgenden Beispiel wird ein gepreßtes Formteil auf Basis nachwachsender Rohstoffe hergestellt.

### Beispiel 1

200 g epoxidiertes Leinöl und 100 g einer 25 Gew.-% igen Lösung von Citronensäure in einem Teilester aus Maleinsäureanhydrid und Dipropylenglykol werden zur Herstellung des Bindemittels mit 0,6 g Kobaltsikkativ und 6 g Cersikkativ (Metallgehalt 10%) eingewogen und vermischt. Diese Mischung wird zu 80 g Holzmehl und 40 g Calciumcarbonat als Füllstoffe gegeben und anschließend homogenisiert. Nach dem Compoundieren wird aus der derartig erhaltenen hochviskosen Masse in einer hydraulischen Presse mit Hilfe eines 1600 cm³ großen, 1,5 mm starken Metallrahmens und eines Silikon-Trenngewebes gepreßte Platten hergestellt. Dabei betragen der Stempeldruck der Presse etwa 10 bar, die Temperatur der Backen 180°C und die Vernetzungsdauer 8 Minuten.

Die so erhaltenen Platten sind biegsam, elastisch, nicht klebrig und durch den ganzen Querschnitt vernetzt.

## Patentansprüche

1. Polyreaktionsprodukte-enthaltendes Material, umfassend das Reaktionsprodukt von mindestens einem Epoxydierungsprodukt eines Carbonsäureesters oder einem Gemisch dieser Epoxydierungsprodukte mit einem Gemisch eines Teilesters einer Di- oder Polycarbonsäure und einer Polycarbonsäure mit drei oder mehr Carbonsäuregruppen als Bindemittel und mindestens einen Füllstoff.

2. Material nach Anspruch 1, wobei die Alkoholkomponente des Teilesters ein Polyol, ausgewählt aus der Gruppe, bestehend aus Dipropylenglykol, Propandiole, Butandiole, Hexandiole, Hexantriole oder Pentaerythrit, ist.

3. Material nach Anspruch 1 oder 2, wobei die Di- oder Polycarbonsäure des Teilesters aus Maleinsäure, Itaconsäure, Fumarsäure, Bernsteinsäure, Methylbernsteinsäure, Äpfelsäure oder Furandicarbonsäure oder einem mindestens zwei dieser Säuren enthaltenden Gemisch davon ausgewählt ist.

4. Material nach einem der Ansprüche 1 bis 3, wobei die Polycarbonsäure mit drei oder mehr Carbonsäuregruppen aus Citronensäure oder Aconitsäure ausgewählt ist.

5. Material nach einem der Ansprüche 1 bis 4, wobei das Gemisch eines Teilesters einer Di- oder Polycarbonsäure und einer Polycarbonsäure mit drei oder mehr Carbonsäuregruppen ein Gemisch von Maleinsäureanhydrid und Dipropylenglykol und Citronensäure umfaßt.

6. Material nach einem der Ansprüche 1 bis 5, wobei das Epoxydierungsprodukt eines Carbonsäureesters epoxydiertes Leinöl, epoxydiertes Sojaöl, epoxydiertes Rizinusöl oder epoxydiertes Rapsöl oder ein mindestens zwei dieser Epoxydierungsprodukte enthaltendes Gemisch davon ist.

7. Material nach einem der Ansprüche 1 bis 6, wobei der Füllstoff Holzmehl, Kreide oder Korkmehl oder ein mindestens zwei dieser Füllstoffe enthaltendes Gemisch davon ist.

8. Material nach einem der Ansprüche 1 bis 7, weiter umfassend mindestens einen Zusatzstoff aus der Gruppe, bestehend aus Pigmenten, Treibmitteln und Hilfsstoffen.

9. Material nach Anspruch 8, wobei der Hilfsstoff aus der Gruppe, bestehend aus Tallölen, synthetischen oder natürlichen Harzen und Sikkativen, ausgewählt ist.

10. Verfahren zur Herstellung des Polyreaktionsprodukte-enthaltenden Materials nach einem der Ansprüche 1 bis 9, umfassend die Schritte:
(1) Vorvernetzen eines Gemisches eines Teilesters einer Di- oder Polycarbonsäure und einer Polycarbonsäure mit drei oder mehr Carbonsäuregruppen und eines Epoxydierungsprodukts eines Carbonsäureesters oder einem Gemisch dieser Epoxidierungsprodukte zum Erhalt einer formbaren Masse,
(2) Compoundieren der formbaren Masse mit mindestens einem Füllstoff, und
(3) Vernetzen der compoundierten Masse und gegebenenfalls Erwärmen zum Erhalt des Materials.

11. Verfahren nach Anspruch 10, wobei die Formung der compoundierten Masse vor dem Vernetzen in Schritt (3) oder gleichzeitig mit dem Vernetzen in Schritt (3) durchgeführt wird.

12. Verfahren nach Anspruch 10 oder 11, wobei die formbare Masse weiter mit mindestens einem Zusatzstoff aus der Gruppe, bestehend aus Pigmenten, Treibmitteln und Hilfsstoffen, compoundiert wird.

13. Verfahren nach einem der Ansprüche 10 bis 12, wobei das Vernetzen der compoundierten Masse in Schritt (3) mittels Verpressen, Kalandrieren und/oder Extrudieren gegebenenfalls unter Erhöhung der bei der in Schritt (1) gewählten Temperatur durchgeführt wird.

14. Verfahren zur Dessinierung von Flächengebilden, worin auf das Material nach einem der Ansprüche 1 bis 9 oder auf eine formbare Masse, erhalten nach einem der Ansprüche 10 bis 13, ein bedrucktes, saugfähiges Material vor dem Formprozeß derart aufgebracht wird, daß beim Formprozeß mindestens ein Teil des noch nicht vernetzten Bindemittels das saugfähige Material durchdringt und nach Aushärten eine dünne, abriebfeste Deckschicht auf der Oberseite des Flächengebildes bildet.

## Claims

1. Polymeric material comprising the reaction product of at least one epoxidation product of a carboxylic ester or of a mixture of these epoxidation products with a mixture of a partial ester of a di- or polycarboxylic acid and a polycarboxylic acid having three or more carboxyl groups as binder and at least one filler.

2. Material according to Claim 1, wherein the alcohol component of the partial ester is a polyol selected from the group consisting of dipropylene glycol, propanediols, butanediols, hexanediols, hexanetriols and pentaerythritol.

3. Material according to Claim 1 or 2, wherein the di- or polycarboxylic acid of the partial ester is selected from the group consisting of maleic acid, itaconic acid, fumaric acid, succinic acid, methylsuccinic acid, malic acid, furandicarboxylic acid and a mixture of at least two thereof.

4. Material according to any of Claims 1 to 3, wherein the polycarboxylic acid having three or more carboxyl groups is selected from the group consisting of citric acid and aconitic acid.

5. Material according to any of Claims 1 to 4, wherein the mixture of a partial ester of a di- or polycarboxylic acid and a polycarboxylic acid having three or more carboxyl groups comprises a mixture of maleic anhydride and dipropylene glycol and citric acid.

6. Material according to any of Claims 1 to 5, wherein the epoxidation product of a carboxylic ester is epoxidated linseed oil, epoxidated soybean oil, epoxidated castor oil or epoxidated rapeseed oil or a mixture comprising at least two thereof.

7. Material according to any of Claims 1 to 6, wherein the filler is wood flour, chalk or cork flour or a mixture of at least two thereof.

8. Material according to any of Claims 1 to 7, further comprising at least one additive selected from the group consisting of pigments, blowing agents and auxiliaries.

9. Material according to Claim 8, wherein the auxiliary is selected from the group consisting of tall oils, synthetic and natural resins and siccatives.

10. Process for preparing the polymeric material of any of Claims 1 to 9, comprising the steps of:
(1) precrosslinking a mixture of a partial ester of a di- or polycarboxylic acid and a polycarboxylic acid having three or more carboxylic acid groups and of an epoxidation product of a carboxylic ester or of a mixture of these epoxidation products to obtain a formable composition,
(2) compounding the formable composition with at least one filler, and
(3) crosslinking the compounded composition with or without heating to obtain the material.

11. Process according to Claim 10, wherein the forming of the compounded composition is carried out before the crosslinking in step 3 or simultaneously with the crosslinking in step 3.

12. Process according to Claim 10 or 11, wherein the formable composition is further compounded with at least one additive selected from the group consisting of pigments, blowing agents and auxiliaries.

13. Process according to any of Claims 10 to 12, wherein the crosslinking of the compounded composition in step (3) is effected by pressing, calendering and/or extruding with or without increasing the temperature chosen in step (1).

14. Process for patterning sheetlike structures, which comprises the material of any of Claims 1 to 9 or a formable composition obtained according to any of Claims 10 to 13 having applied to it a printed absorbent material prior to the forming process in such a way that, in the forming process, at least a portion of the as yet uncrosslinked binder penetrates through the absorbent material and, after curing, forms a thin abrasion-resistant cover layer on the top side of the sheetlike structure.

## Revendications

1. Matériau contenant des produits de polyréaction, comprenant le produit de réaction d'au moins un produit d'époxydation d'un ester d'acide carboxylique ou un mélange de ces produits d'époxydation avec un mélange d'un ester partiel d'un acide dicarboxylique ou polycarboxylique et d'un acide polycarboxylique portant trois ou plus de trois groupes acide carboxylique comme liant, et au moins une charge.

2. Matériau suivant la revendication 1, dans lequel le composant alcool de l'ester partiel est un polyol, choisi dans le groupe consistant en dipropylène-glycol, propane-diols, butane-diols, hexane-diols, hexane-triols ou pentaérythritol.

3. Matériau suivant la revendication 1 ou 2, dans lequel l'acide dicarboxylique ou polycarboxylique de l'ester partiel est choisi entre l'acide maléique, l'acide itaconique, l'acide fumarique, l'acide succinique, l'acide méthylsuccinique, l'acide malique ou l'acide furanne-dicarboxylique ou un mélange contenant au moins deux de ces acides.

4. Matériau suivant l'une des revendications 1 à 3, dans lequel l'acide polycarboxylique portant trois ou plus de trois groupes acide carboxylique est choisi entre l'acide citrique et l'acide aconitique.

5. Matériau suivant l'une des revendications 1 à 4, dans lequel le mélange d'un ester partiel d'un acide dicarboxylique ou polycarboxylique et d'un acide polycarboxylique portant trois ou plus de trois groupes acide carboxylique comprend un mélange d'anhydride d'acide maléique et de dipropylène-glycol et d'acide citrique.

6. Matériau suivant l'une des revendications 1 à 5, dans lequel le produit d'époxydation d'un ester d'acide carboxylique est l'huile de lin époxydée, l'huile de soja époxydée, l'huile de ricin époxydée ou l'huile de colza époxydée ou un mélange contenant au moins deux de ces produits d'époxydation.

7. Matériau suivant l'une des revendications 1 à 6, dans lequel la charge est formée de farine de bois, de craie ou de farine de liège ou d'un mélange contenant au moins deux de ces charges.

8. Matériau suivant l'une des revendications 1 à 7, comprenant en outre au moins un additif du groupe consistant en pigments, agents porogènes et substances auxiliaires.

9. Matériau suivant la revendication 8, dans lequel la substance auxiliaire est choisie dans le groupe consistant en talloils, résines synthétiques ou naturelles et siccatives.

10. Procédé de production du matériau contenant des produits de polyréaction suivant l'une des revendications 1 à 9, qui comprend les étapes consistant :
(1) à préréticuler un mélange d'un ester partiel d'un acide dicarboxylique ou polycarboxylique et d'un acide polycarboxylique porteur de trois ou plus de trois groupes acide carboxylique et d'un produit d'époxydation d'un ester d'acide carboxylique ou un mélange de ces produits d'époxydation pour obtenir une masse moulable,
(2) à former une composition de la masse moulable avec au moins une charge et
(3) à réticuler la masse composée et à la chauffer, le cas échéant, pour obtenir le matériau.

11. Procédé suivant la revendication 10, dans lequel le formage de la masse mise en composition est effectué avant la réticulation dans l'étape (3) ou en même temps que la réticulation dans l'étape (3).

12. Procédé suivant la revendication 10 ou 11, dans lequel la masse moulable est en outre mise en composition avec au moins un additif du groupe consistant en pigments, agents porogènes et substances auxiliaires.

13. Procédé suivant l'une des revendications 10 à 12, dans lequel la réticulation de la masse mise en composition dans l'étape (3) est effectuée par pressage, calandrage et/ou extrusion, le cas échéant, avec élévation de la température choisie dans l'étape (1).

14. Procédé de formation d'un motif sur des corps plans, dans lequel une matière absorbante imprimée est appliquée avant le processus de formage sur le matériau selon l'une des revendications 1 à 9 ou sur une masse moulable obtenue selon l'une des revendications 10 à 13, de façon telle que, pendant le processus de formage, une partie au moins du liant qui n'est pas encore réticulé traverse la matière absorbante et forme, après durcissement, une mince couche de recouvrement résistant à l'usure par frottement sur la surface supérieure du corps plan.
